# EUROPEAN PATENT SPECIFICATION

(11) **EP 2 299 628 B1**
(45) Date of publication and mention of the grant of the patent: **19.09.2012**
(21) Application number: 09793843.5
(22) Date of filing: 07.07.2009
(51) Int. Cl.: H04L 12/24, H04L 29/06, H04W 4/10

(54) **METHOD AND SYSTEM FOR MANAGING THE USER FLOOR AND PUSH TO TALK OVER CELLULAR SERVER**
VERFAHREN UND SYSTEM ZUR VERWALTUNG EINER BENUTZEROBERFLÄCHE FÜR PUSH-TO-TALK ÜBER EINEN MOBILGERÄTESERVER
PROCÉDÉ ET SYSTÈME DE GESTION DE LA PRISE DE PAROLE DE L'UTILISATEUR ET SERVEUR DE MESSAGERIE VOCALE INSTANTANÉE

(30) Priority: 08.07.2008 CN 200810133060
(43) Date of publication of application: 23.03.2011
(73) Proprietor: Huawei Technologies Co., Ltd., Longgang District, Shenzhen Guangdong 518129 (CN)
(72) Inventor: KONG, Lingda, Shenzhen Guangdong 518129 (CN); WANG, Jinliang, Shenzhen Guangdong 518129 (CN)
(74) Representative: Isarpatent
(86) International application number: PCT/CN2009/072668
(87) International publication number: WO 2010/003368

(56) References cited:
- CN-A- 1 863 340
- CN-A- 101 005 651
- CN-A- 101 159 946
- US-A1- 2006 154 681
- US-A1- 2007 249 381
- HALLIN T ET AL: "User Plane Timer Details; OMA-POC-2004-0364-UP_9-Timers", INTERNET CITATION, 11 June 2004 (2004-06-11), pages 1-9, XP002552258, Retrieved from the Internet: URL:http://member.openmobilealliance.org/f tp/Public_documents/MWG/MWG-POC /2004/ [retrieved on 2009-10-26]
- "PUSH-TO-TALK OVER CELLULAR (POC) USER PLANE; TRANSPORT PROTOCOLS; POC RELEASE 1.0", TRANSPORT PROTOCOLS V1.1.0, XX, XX, 1 August 2003 (2003-08-01), page COMPLETE, XP000863836,

## Description

### FIELD OF THE INVENTION

The present invention relates to network communications technologies, and in particular, to a Push to Talk over Cellular (PoC) server, a method and a system for managing talk burst of a user.

### BACKGROUND OF THE INVENTION

As a Push to Talk (PTT) service based on a cellular mobile communications network, the PoC service permits a user to establish instant communication with other one or more users through specific keys of a terminal. The development of the PoC service may be independent from a lower layer bearer network, and is realized by fully utilizing the lower layer bearer network and through a half-duplex Voice over Internet Protocol (VoIP) technology.

The PoC service includes four types of sessions, that is, a one-to-one session, an Adhoc PoC group session, a pre-arranged PoC group session, and a chat PoC group session. The one-to-one session only relates to two users, that is, a calling party and a called party. The Adhoc PoC group session is a PoC group that temporarily permits multiple users to participate in a session, in which the establishment of the group and the establishment of the session are synchronous, and all participants are temporarily selected and organized by the initiator of the session. The one-to-one session may be considered as a special case of the Adhoc PoC group session. The pre-arranged PoC group session is a permanent group, and all the default participants of the pre-arranged PoC group session belong to a pre-established PoC group, in which the establishment of the group session will directly initiate an invitation to all members. The chat PoC group session is also a permanent group, in which each group member individually gets to be a PoC member, if a user joins the group, the establishment of the session is identified, but the establishment of the session does not initiate the call to each member in the chat PoC group, while the group member actively gets to be the member. The talk burst request priority level of the user is a unique standard representing the talk burst control capacity of the user during the PoC session.

The talk burst request priority level of the PoC user includes four levels from high to low, which are a pre-emptive priority, a high priority, a normal priority, and a listen-only level. The user owning the talk burst of the pre-emptive priority may preempt the talk burst presently owned by other users of non-pre-emptive priority; while the user owning the talk burst control of the listen-only level can only serve as a listener, and has no right to talk. The talk burst control policy of the PoC service is that: The user can send media to other users only after acquiring the permission to send a talk burst. Because the PoC session is a half-duplex service, the user owning the permission to talk cannot occupy the talk burst for a long period of time. Therefore, the user owning the permission to send a talk burst has a limit of a maximal occupation time of talk burst, and when the user owns the permission to send a talk burst for a too long period of time, the server side will actively revoke the permission to talk.

Tom Hallin and Johanna Wild disclosed a method for setting timers in PoC server and PoC client ("User Plane Timer Details; OMA-POC-2004-0364-UP_9-Timers" OPEN MOBILE ALLIANCE, 11 June 2004, http://member.openmobilealliance.org/f tp/Public documents/MWG/M WG-POC/2004/>). The method comprises comparing the talk burst time of a PoC user to a maximum permissible value. If the maximum permissible value is exceeded, revoke the permission to speak. The maximum permissible value may be set differently for different users.

During implementation of the present invention, the inventors find that in the prior art, the granted maximal occupation time of talk burst occupied by all users is uniformly set, so that at least this drawback exists: the differences between users in the PoC session cannot be reflected.

### SUMMARY OF THE INVENTION

The present invention is directed to a PoC server, a method and a system for managing a user talk burst, so as to realize differential configuration of permitted maximal occupation time of talk burst occupied by users owning different talk burst request priority levels.

In order to achieve the above objective, as a first aspect of the invention, a method for managing a user talk burst, where the method includes:
determining, by a PoC server, a talk burst request priority level of a user in a PoC session, wherein different talk burst maximal occupation times are set for users owning different talk burst request priority levels;
starting monitoring, by the PoC server, whether a maximal occupation time of talk burst corresponding to the talk burst request priority level of the user is exceeded; and
when the talk burst maximal occupation time is exceeded, revoking, by the PoC server, the permission to send the talk burst of the user.

In the method for managing the user talk burst according to the present invention, the talk burst maximal occupation time of the user is determined according to the talk burst request priority level of the user in the PoC session, when the talk burst maximal occupation time of the user is exceeded, the permission to send a talk burst of the user is revoked. Thus, differentiation of the permitted talk burst maximal occupation time occupied by users owning different talk burst request priority levels is realized, thereby facilitating flexible management of the user talk burst and enriching service experience of the user.

In order to achieve the above objective, as a second aspect of the invention, a PoC server, where the PoC server includes:
a first determination module, configured to determine a talk burst request priority level of a user in a PoC session, wherein different talk burst maximal occupation times are set for users owning different talk burst request priority levels;
an acquisition module, configured to acquire a preset maximal occupation time of talk burst corresponding to the talk burst request priority level of the user; and
a talk burst revoke module, configured to start monitoring whether the talk burst maximal occupation time corresponding to the talk burst request priority level of the user is exceeded, and revoke the permission to send the talk burst of the user when the talk burst maximal occupation time is exceeded.

In the PoC server according to the present invention, the first determination module determines the talk burst request priority level of the user in the PoC session, the acquisition module acquires the preset talk burst maximal occupation time corresponding to the talk burst request priority level of the user according to a determination result of the first determination module, and the talk burst revoke module revokes the permission to send the talk burst of the user when the talk burst maximal occupation time of the user is exceeded. Thus, differentiation of the permitted talk burst maximal occupation time occupied by users owning different talk burst request priority levels is realized, thereby facilitating flexible management of the user talk burst and enriching service experience of the user.

In order to achieve the above objective, a as a third aspect of the invention, a system for managing talk burst of a user, where the system includes a user terminal and a PoC server.

The user terminal is configured to acquire a permission to send a talk burst in a PoC session.

The PoC server is configured to determine a talk burst request priority level of a user in the PoC session; acquire a preset maximal occupation time of talk burst corresponding to the talk burst request priority level of the user; start monitoring of the talk burst maximal occupation time corresponding to the talk burst request priority level of the user, and revoke the permission to send the talk burst of the user, when the talk burst maximal occupation time is exceeded.

In the system for managing talk burst of the user according to the present invention, the user acquires the right to send the talk burst in the PoC session through the user terminal, the PoC server determines the talk burst request priority level of the user, acquires the preset talk burst maximal occupation time corresponding to the talk burst request priority level of the user, and revokes the permission to send the talk burst of the user when the talk burst maximal occupation time of the user is exceeded. Thus, differentiation of the permitted talk burst maximal occupation time occupied by users owning different talk burst request priority levels is realized, thereby facilitating flexible management of the user talk burst and enriching service experience of the user.

### BRIEF DESCRIPTION OF THE DRAWINGS

FIG. 1 is a flow chart of a method for managing talk burst of a user according to an embodiment of the present invention;
FIG. 2 is a flow chart of a method for managing talk burst of a user according to an embodiment of the present invention;
FIG. 3 is a flow chart of a method for managing talk burst of a user according to an embodiment of the present invention;
FIG. 4 is a flow chart of a method for managing talk burst of a user according to an embodiment of the present invention;
FIG. 5 is a flow chart of a method for managing talk burst of a user according to an embodiment of the present invention;
FIG. 6 is a structural view of a PoC server according to an embodiment of the present invention;
FIG. 7 is a structural view of a PoC server according to an embodiment of the present invention; and
FIG. 8 is a structural view of a system for managing talk burst of a user according to an embodiment of the present invention.

### DETAILED DESCRIPTION OF THE EMBODIMENTS

Hereinafter, the technical solutions of the present invention are illustrated in detail with reference to the accompanying drawings and the following embodiments.

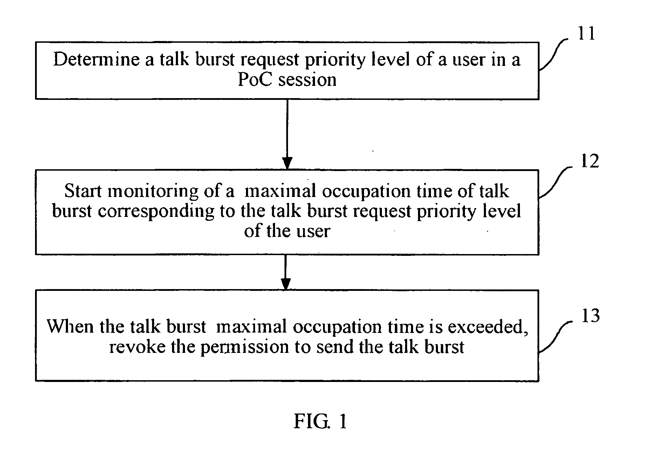

FIG. 1 is a flow chart of a method for managing talk burst of a user according to an embodiment of the present invention. As shown in FIG. 1, the method according to this embodiment includes the following steps.

In step 11, a PoC server determines a talk burst request priority level of a user in a PoC session.

In step 12, the PoC server starts monitoring of a maximal occupation time of talk burst corresponding to the talk burst request priority level of the user.

The PoC server presets a corresponding talk burst maximal occupation time for the user according to the talk burst request priority level of the user. The talk burst request priority level acquired by the user in the PoC session includes: a pre-emptive priority, a high priority, a normal priority, and a listen-only level. The PoC server sets different talk burst maximal occupation times for the user according to the talk burst request priority level of the user. Because the user owning the listen-only level of talk burst request can only serve as a listener, and has no right to talk, the PoC server needs not to set a corresponding talk burst maximal occupation time for the user owning the talk burst request priority level of the listen-only level.

In step 13, when the talk burst maximal occupation time is exceeded, the PoC server revokes the permission to send the talk burst of the user.

The PoC server may detect whether audio media of the PoC session is started to send. If the PoC server detects that the audio media of the PoC session is initiated, the PoC server starts to count the time for the user initiating the audio media according to the set talk burst maximal occupation time of the user. If the PoC server receives an audio media ending request, but the talk burst maximal occupation time of the user is not exceeded, the talk of the user is naturally stopped; if the server detects that the talk burst maximal occupation time of the user is exceeded, but the audio media does not end, the PoC server actively ends the talk of the user, and revokes the permission to send the talk burst of the user.

In this embodiment, the talk burst maximal occupation time of the user is determined according to the talk burst request priority level of the user in the PoC session, when the talk burst maximal occupation time of the user is exceeded, the permission to send a talk burst of the user is revoked. Thus, differentiation of the permitted talk burst maximal occupation time occupied by users owning different talk burst request priority levels is realized, thereby facilitating flexible management of the user talk burst and enriching service experience of the user.

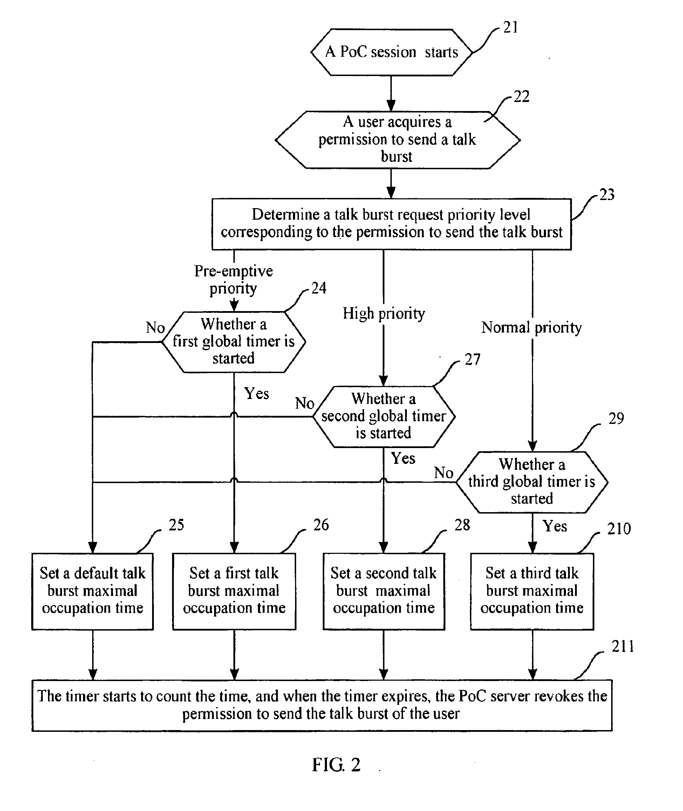

FIG. 2 is a flow chart of a method for managing talk burst of a user according to an embodiment of the present invention. As shown in FIG. 2, the method according to this embodiment includes the following steps.

In step 21, a PoC session starts.

In step 22, a user acquires a permission to send a talk burst in the PoC session.

In step 23, a PoC server determines a talk burst request priority level corresponding to the permission to send the talk burst acquired by the user; if the talk burst request priority level is a pre-emptive priority, step 24 is performed; if the talk burst request priority level is a high priority, step 27 is performed; and if the talk burst request priority level is a normal priority, step 29 is performed.

In step 24, the PoC server determines whether a first global timer T211 is started, and if the first global timer T211 is started, step 26 is performed; if the first global timer T211 is not started, step 25 is performed. The first global timer T211 is corresponding to the talk burst of the pre-emptive priority, and is configured to set the talk burst maximal occupation time for the user owning the talk burst request priority level of the pre-emptive priority, that is, the first talk burst maximal occupation time.

In step 25, the PoC server sets a preconfigured talk burst maximal occupation time, that is, the default talk burst maximal occupation time, for the user on a default timer T2; and step 211 is performed.

The default talk burst maximal occupation time is a predetermined configuration of the talk burst time of the user currently defined in the Open Mobile Alliance (hereinafter, referred to as OMA) specification. The default configuration (default timer T2) of the talk burst time of the user in the OMA specification is described in Table 1.

**Table 1 Configuration Description of Default Timer T2**

| **Timer** | **Value of Timer** | **Start Occasion** | **Normal Ending Reason** | **Treatment after Timeout** |
|---|---|---|---|---|
| Default Timer T2 | Number set for the user may be determined by the subscribed data, and a default value is 30 seconds. | Detect that the audio media is started | Detect that the audio media ends | Treatment when T2 expires: canceling the user talk burst having a too long talk burst occupation time |

In step 26, the PoC server sets a first talk burst maximal occupation time for the user on the first global timer T211; and step 211 is performed.

In step 27, the PoC server determines whether a second global timer T212 is started, and if the second global timer T212 is started, step 28 is performed; if the second global timer T212 is not started, step 25 is performed. The second global timer T212 is corresponding to a talk burst request of the high priority, and is configured to set a talk burst maximal occupation time for the user owning the talk burst request priority level of the high priority, that is, a second talk burst maximal occupation time.

In step 28, the PoC server sets a second talk burst maximal occupation time for the user on the second global timer T212; and step 211 is performed.

In step 29, the PoC server determines whether a third global timer T213 is started, and if the third global timer T213 is started, step 210 is performed; if the third global timer T213 is not started, step 25 is performed. The third global timer T213 is corresponding to a talk burst request of the normal priority, and is configured to set a talk burst maximal occupation time for the user owning the talk burst request priority level of the normal priority, that is, a third talk burst maximal occupation time.

In step 210, the PoC server sets a third talk burst maximal occupation time for the user on a third global timer T213; and step 211 is performed.

The global timer includes the first global timer T211, the second global timer T212, and the third global timer T213, and one of the configuration examples of the global timers corresponding to the talk burst request priority levels is as shown in Table 2.

**Table 2 Configuration Examples of Global Timers**

| **Timer** | **Value of Timer** | **Start Occasion** | **Normal Ending Reason** | **Treatment after Timeout** |
|---|---|---|---|---|
| First Global Timer T211 | The first talk burst maximal occupation time owned by the user of the pre-emptive priority with a default configuration of T2 | The same as T2 (referring to Table 1) | The same as T2 (referring to Table 1) | The same as T2 (referring to Table 1) |
| Second Global Timer T212 | The second talk burst maximal occupation time owned by the user of the high priority with a default configuration of T2 | The same as T2 (referring to Table 1) | The same as T2 (referring to Table 1) | The same as T2 (referring to Table 1) |
| Third Global Timer T213 | The third talk burst maximal occupation time owned by the user of the normal priority with a default configuration of T2 | The same as T2 (referring to Table 1) | The same as T2 (referring to Table 1) | The same as T2 (referring to Table 1) |

In step 211, timer T2, T211, T212, or T213 starts to count the time, and when the timer expires, the PoC server revokes the permission to send the talk burst of the user.

In this embodiment, the global timers for setting corresponding talk burst request priority levels, that is, the first global timer, the second global timer, and the third global timer, are added in the PoC server, so that different talk burst maximal occupation times are set for users owning different talk burst request priority levels respectively, and differential configuration of the talk burst occupation time among different users is realized, so as to facilitate the flexible management of the user talk burst, and enrich the service experience of the user. Furthermore, when the global timers are not started, the default timer sets the default talk burst maximal occupation time for the user, so that in this embodiment, the setting of the talk burst occupation time of the user defined in the OMA in the prior art is compatible, thereby further improving the flexibility of the management of the user talk burst.

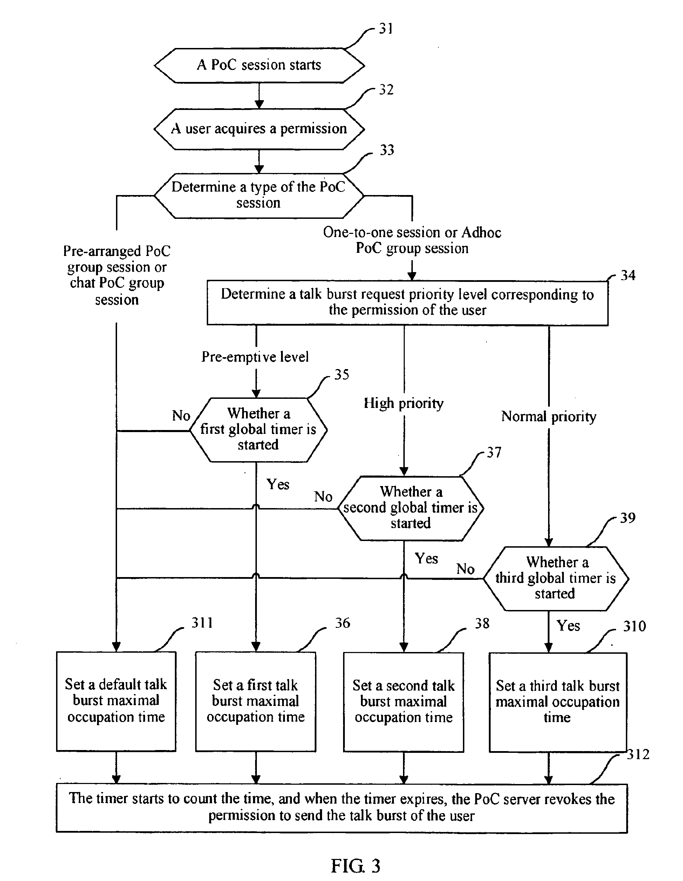

FIG. 3 is a flow chart of a method for managing talk burst of a user according to an embodiment of the present invention. As shown in FIG. 3, the method according to this embodiment includes the following steps.

In step 31, a PoC session starts.

In step 32, a user acquires a permission to send a talk burst in the PoC session.

In step 33, a PoC server determines a type of the PoC session, and if the type of the PoC session is a group session, step 311 is performed; and if the type of the PoC session is a non-group session, step 34 is performed. The group session includes a pre-arranged PoC group session or a chat PoC group session; and the non-group session includes a one-to-one session or an Adhoc PoC group session.

In step 34, when the type of the PoC session is a non-group session (a one-to-one session or an Adhoc PoC group session), the PoC server determines the talk burst request priority level corresponding to the permission to send the talk burst acquired by the user; if the talk burst request priority level is a pre-emptive priority, step 35 is performed; if the talk burst request priority level is a high priority, step 37 is performed; and if the talk burst request priority level is a normal priority, step 39 is performed.

In step 35, the PoC server determines whether a first global timer T211 is started, and if the first global timer T211 is started, step 36 is performed; if the first global timer T211 is not started, step 311 is performed.

In step 36, the PoC server sets a first talk burst maximal occupation time for the user T211 on the first global timer T211; and step 312 is performed.

In step 37, the PoC server determines whether a second global timer T212 is started, and if the second global timer T212 is started, step 38 is performed; if the second global timer T212 is not started, step 311 is performed.

In step 38, the PoC server sets a second talk burst maximal occupation time for the user on the second global timer T212; and step 312 is performed.

In step 39, the PoC server determines whether a third global timer T213 is started, and if the third global timer T213 is started, step 310 is performed; if the third global timer T213 is not started, step 311 is performed.

In step 310, the PoC server sets a third talk burst maximal occupation time for the user on the third global timer T213; and step 312 is performed.

In step 311, the PoC server sets a preconfigured talk burst maximal occupation time, that is, a default talk burst maximal occupation time, for the user on a default timer T2; and step 312 is performed.

In step 312, the timer (T2, T211, T212, or T213) starts to count the time, and when the timer expires, the PoC server revokes the permission to send the talk burst of the user.

In this embodiment, the PoC server determines the type of the PoC session and the talk burst request priority level of the user acquiring the permission to send the talk burst in the PoC session, and sets a corresponding talk burst maximal occupation time for the user. When the type of the PoC session is a group session (a pre-arranged PoC group session or a chat PoC group session), a default talk burst maximal occupation time is set for the user by adopting a timer for revoking the user talk burst; when the type of the PoC session is a non-group session (a one-to-one session or an Adhoc PoC group session), according to the global timers corresponding to the talk burst request priority levels of the users, the corresponding talk burst maximal occupation times are set for the users respectively. Thus, in the PoC session, according to the type of the PoC session and the talk burst request priority level of the user, differentiation of talk burst occupation time is realized, so as to improve the flexibility of the management of the user talk burst, and enrich the service experience of the user. For detailed description of steps 35-312 of this embodiment, reference may be made to the description of steps 24-211 in the previous embodiment of the method for managing the user talk burst according to the present invention, which will not be repeated herein.

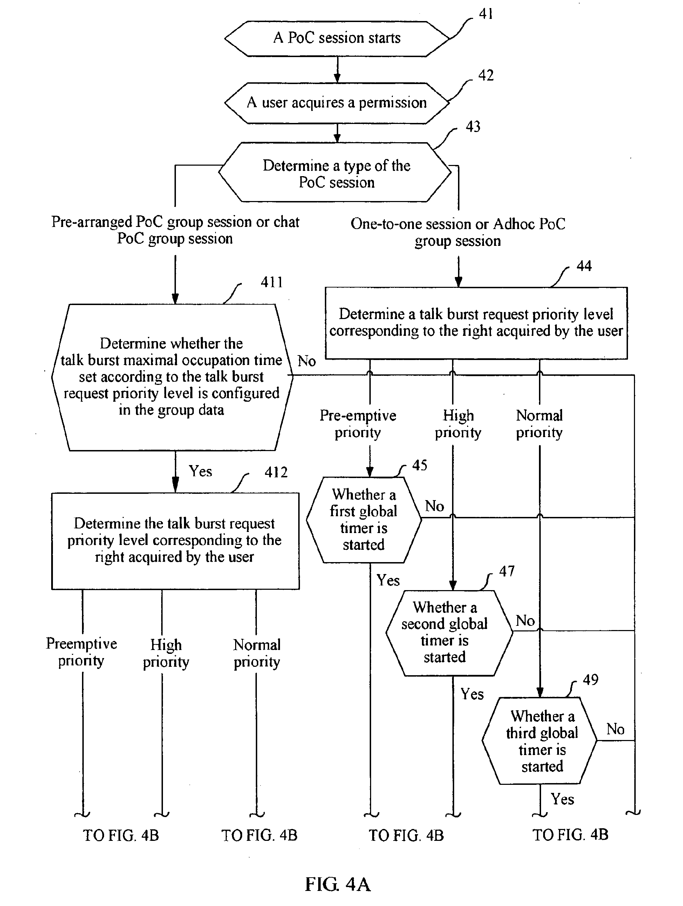

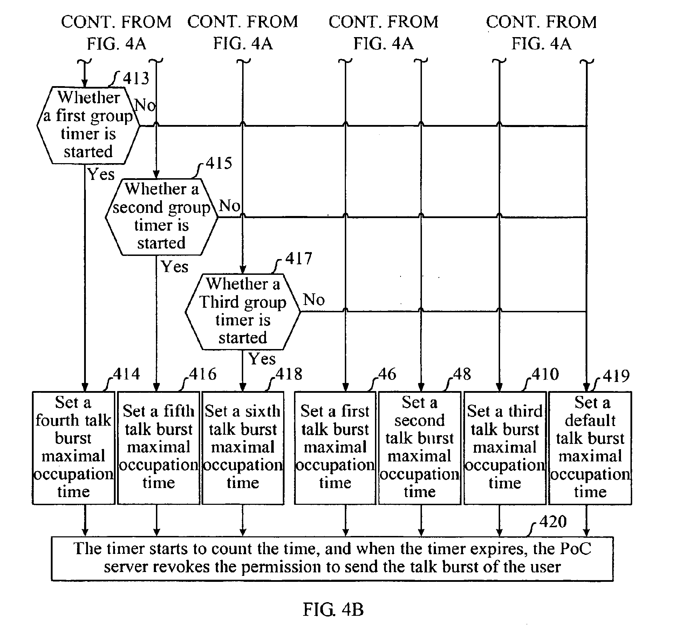

FIG. 4 is a flow chart of a method for managing a user talk burst according to an embodiment of the present invention. As shown in FIG. 4, the method according to this embodiment includes the following step.

In step 41, a PoC session starts.

In step 42, a user acquires a permission to send a talk burst in the PoC session.

In step 43, a PoC server determines a type of the PoC session, and if the type of the PoC session is a group session, step 411 is performed; and if the type of the PoC session is a non-group session, step 44 is performed. The group session includes a pre-arranged PoC group session or a chat PoC group session; and the non-group session includes a one-to-one session or an Adhoc PoC group session.

In step 44, when the type of the PoC session is a non-group session (a one-to-one session or an Adhoc PoC group session), the PoC server determines the talk burst request priority level corresponding to the talk burst acquired by the user, and if the talk burst request priority level is a pre-emptive priority, step 45 is performed; if the talk burst request priority level is a high priority, step 47 is performed; and if the talk burst request priority level is a normal priority, step 49 is performed.

In step 45, the PoC server determines whether a first global timer T211 is started, and if the first global timer T211 is started, step 46 is performed; if the first global timer T211 is not started, step 419 is performed.

In step 46, the PoC server sets a first talk burst maximal occupation time T211 for the user on the first global timer T211; and step 420 is performed.

In step 47, the PoC server determines whether a second global timer T212 is started, and if the second global timer T212 is started, step 48 is performed; if the second global timer T212 is not started, step 419 is performed.

In step 48, the PoC server sets a second talk burst maximal occupation time for the user on the second global timer T212; and step 420 is performed.

In step 49, the PoC server determines whether a third global timer T213 is started, and if the third global timer T213 is started, step 410 is performed; if the third global timer T213 is not started, step 419 is performed.

In step 410, the PoC server sets a third talk burst maximal occupation time for the user on the third global timer T213; and step 420 is performed.

For detailed description of steps 45-410 of this embodiment, reference may be made to the description of step 24 and steps 26-210 of the embodiment of the method for managing the user talk burst according to the present invention, which will not be repeated herein.

In step 411, the PoC server determines whether the corresponding talk burst maximal occupation time set according to the talk burst request priority level of the user is configured in the group data, and if the corresponding talk burst maximal occupation time set according to the talk burst request priority level of the user is configured in the group data, step 412 is performed; if the corresponding talk burst maximal occupation time set according to the talk burst request priority level of the user is not configured in the group data, step 419 is performed.

In step 412, when the type of the PoC session is a group session (a pre-arranged PoC group session or a chat PoC group session), the PoC server determines the talk burst request priority level corresponding to the permission to send the talk burst acquired by the user, and if the talk burst request priority level is a pre-emptive priority, step 413 is performed; if the talk burst request priority level is a high priority, step 415 is performed; and if the talk burst request priority level is a normal priority, step 417 is performed.

In step 413, the PoC server determines whether a first group timer T221 is started, and if the first group timer T221 is started, step 414 is performed; if the first group timer T221 is not started, step 419 is performed. The first group timer T221 is configured to set a talk burst maximal occupation time, that is, a fourth talk burst maximal occupation time, for the user when the type of the session is the group session and the talk burst request priority level of the user is the pre-emptive priority.

In step 414, the PoC server sets a fourth talk burst maximal occupation time for the user on the first group timer T221; and step 420 is performed.

In step 415, the PoC server determines whether a second group timer T222 is started, and if the second group timer T222 is started, step 416 is performed; if the second group timer T222 is not started, step 419 is performed. The second group timer T222 is configured to set a talk burst maximal occupation time, that is, a fifth talk burst maximal occupation time, for the user when the type of the session is the group session and the talk burst request priority level of the user is the high priority.

In step 416, the PoC server sets a fifth talk burst maximal occupation time for the user on the second group timer T222; and step 420 is performed.

In step 417, the PoC server determines whether a third group timer T223 is started, and if the third group timer T223 is started, step 418 is performed; if the third group timer T223 is not started, step 419 is performed. The third group timer T223 is configured to set a talk burst maximal occupation time, that is, a sixth talk burst maximal occupation time, for the user when the type of the session is the group session and the talk burst request priority level of the user is the normal priority.

In step 418, the PoC server sets a sixth talk burst maximal occupation time for the user on the third group timer T223; and step 420 is performed.

In a permanent group (a pre-arranged PoC group or a chat PoC group), corresponding talk burst maximal occupation times are respectively set for the users according to the talk burst request priority levels of the users, for example, in a pre-arranged PoC group or a chat PoC group, a fourth talk burst maximal occupation time T221 is set for the user of the pre-emptive priority, a fifth talk burst maximal occupation time T222 is set for the user of the high priority, and a sixth talk burst maximal occupation time T223 is set for the user of the normal priority. The configuration may be extended based on the group data format in the current OMA specification. The talk burst control configuration corresponding to each user in the group is added according to the talk burst request priority level of the user in the group. An example is given in the following.
<talkburst-priority-value>
< tbpriority level=3>T221</priority>
< tbpriority level=2>T222</priority>
< tbpriority level=1>T223</priority>
</talkburst-priority-value>

The group timer includes the first group timer T211, the second group timer T212, and the third group timer T213, and one of the configuration examples of the group timers corresponding to the talk burst request priority levels is as shown in Table 3.

**Table 3 Configuration Examples of Group Timers**

| **Timer** | **Value of Timer** | **Start Occasion** | **Normal Ending Reason** | **Treatment after Timeout** |
|---|---|---|---|---|
| First Group Timer T221 | The fourth talk burst maximal occupation time owned by the user of the pre-emptive priority with a default configuration of T2 | The same as T2 (referring to Table 1) | The same as T2 (referring to Table 1) | The same as T2 (referring to Table 1) |
| Second Group Timer T222 | The fifth talk burst maximal occupation time owned by the user of the high priority with a default configuration of T2 | The same as T2 (referring to Table 1) | The same as T2 (referring to Table 1) | The same as T2 (referring to Table 1) |
| Third Group Timer T223 | The sixth talk burst maximal occupation time owned by the user of the normal priority with a default configuration of T2 | The same as T2 (referring to Table 1) | The same as T2 (referring to Table 1) | The same as T2 (referring to Table 1) |

In step 419, the PoC server sets a preconfigured talk burst maximal occupation time, that is, a default talk burst maximal occupation time for the user on the default timer T2; and step 420 is performed.

In step 420, the timer (T2, T211, T212, T213, T221, T222, or T223) starts to count the time, and when the timer expires, the PoC server revokes the permission to send the talk burst of the user.

In this embodiment, the differential configuration of the talk burst occupation time is realized according to the type of the PoC session and the talk burst request priority level of the user. Furthermore, by adding the group timer in the group data, the PoC server may configure the permitted talk burst maximal occupation time occupied by the users of the talk burst request priority levels in the group session according to the value configured in the group data; if the group timer is not configured, a default talk burst occupation time is set for the user according to the default timer defined in the OMA specification, so as to improve the flexibility of talk burst management, and enrich the service experience of the user.

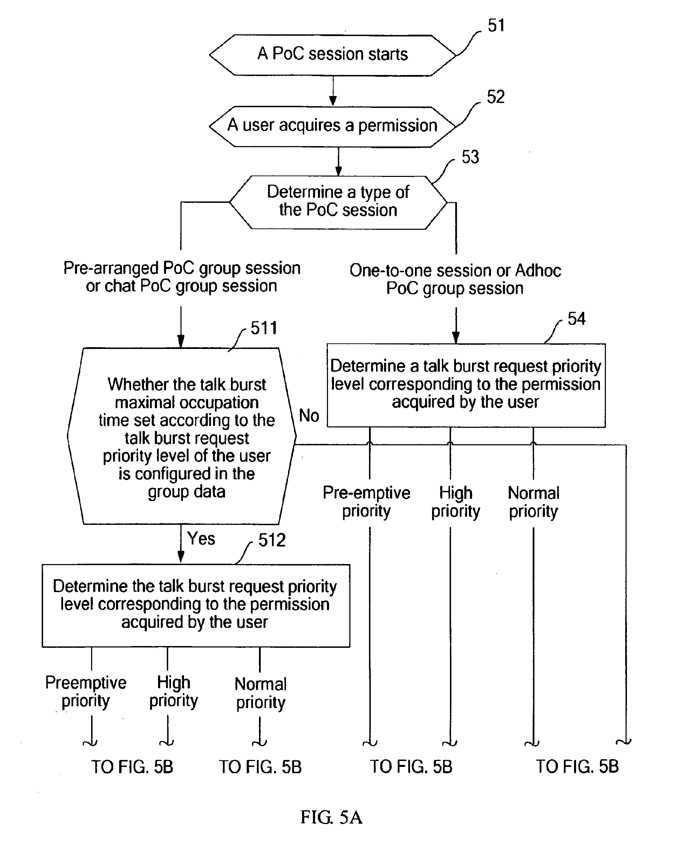

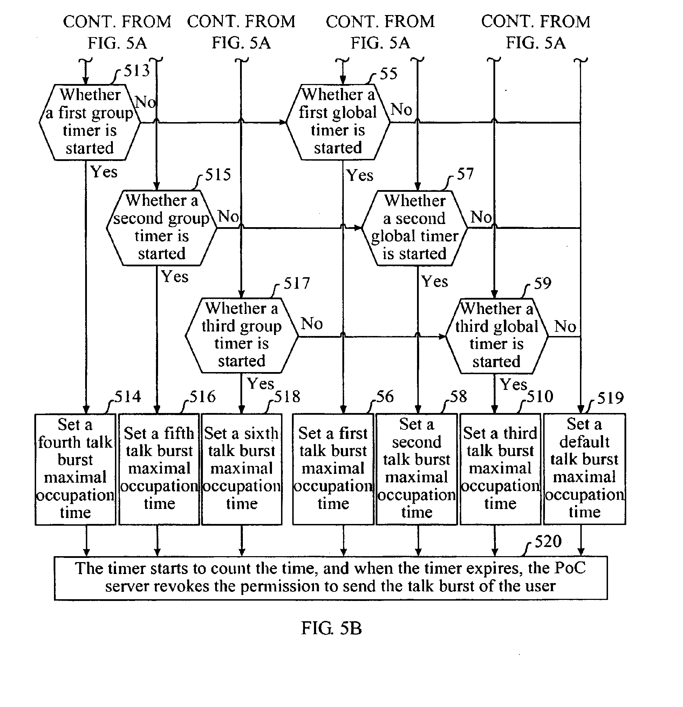

FIG. 5 is a flow chart of a method for managing a user talk burst according to an embodiment of the present invention. As shown in FIG. 5, the method according to this embodiment includes the following steps.

In step 51, a PoC session starts.

In step 52, a user acquires a permission to send a talk burst in the PoC session.

In step 53, a PoC server determines a type of the PoC session, and if the type of the PoC session is a group session (a pre-arranged PoC group session or a chat PoC group session), step 511 1 is performed; if the type of the PoC session is a non-group session (a one-to-one session or an Adhoc PoC group session), step 54 is performed.

In step 54, when the type of the PoC session is a non-group session (a one-to-one session or an Adhoc PoC group session), the PoC server determines the talk burst request priority level corresponding to the talk burst acquired by the user, and if the talk burst request priority level is a pre-emptive priority, step 55 is performed; if the talk burst request priority level is a high priority, step 57 is performed; and if the talk burst request priority level is a normal priority, step 59 is performed.

In step 55, the PoC server determines whether a first global timer T211 is started, and if the first global timer T211 is started, step 56 is performed; if the first global timer T211 is not started, step 519 is performed.

In step 56, the PoC server sets a first talk burst maximal occupation time T211 for the user on the first global timer T211; and step 520 is performed.

In step 57, the PoC server determines whether a second global timer T212 is started, and if the second global timer T212 is started, step 58 is performed; if the second global timer T212 is not started, step 519 is performed.

In step 58, the PoC server sets a second talk burst maximal occupation time for the user on the second global timer T212; and step 520 is performed.

In step 59, the PoC server determines whether a third global timer T213 is started, and if the third global timer T213 is started, step 510 is performed; if the third global timer T213 is not started, step 519 is performed.

In step 510, the PoC server sets a third talk burst maximal occupation time for the user on the third global timer T213; and step 520 is performed.

For detailed description of steps 55-510 of this embodiment, reference may be made to the description of step 24 and steps 26-210 of the embodiment of the method for managing the user talk burst according to the present invention, which will not be repeated herein.

In step 511, the PoC server determines whether the corresponding talk burst maximal occupation time set according to the talk burst request priority level of the user is configured in the group data, and if the corresponding talk burst maximal occupation time set according to the talk burst request priority level of the user is configured in the group data, step 512 is performed; if the corresponding talk burst maximal occupation time set according to the talk burst request priority level of the user is not configured in the group data, step 519 is performed.

In step 512, when the type of the PoC session is a group session (a pre-arranged PoC group session or a chat PoC group session), the PoC server determines the talk burst request priority level corresponding to the permission to send talk burst acquired by the user, and if the talk burst request priority level is a pre-emptive priority, step 513 is performed; if the talk burst request priority level is a high priority, step 515 is performed; and if the talk burst request priority level is a normal priority, step 517 is performed.

In step 513, the PoC server determines whether a first group timer T221 is started, and if the first group timer T221 is started, step 514 is performed; if the first group timer T221 is not started, step 55 is performed. The first group timer T221 is configured to set a talk burst maximal occupation time, that is, a fourth talk burst maximal occupation time, for the user when the type of the session is the group session and the talk burst request priority level of the user is the pre-emptive priority.

In step 514, the PoC server sets the fourth talk burst maximal occupation time for the user on the first group timer T221; and step 520 is performed.

In step 515, the PoC server determines whether a second group timer T222 is started, and if the second group timer T222 is started, step 516 is performed; if the second group timer T222 is not started, step 57 is performed. The second group timer T222 is configured to set a talk burst maximal occupation time, that is, a fifth talk burst maximal occupation time, for the user when the type of the session is the group session and the talk burst request priority level of the user is the high priority.

In step 516, the PoC server sets a fifth talk burst maximal occupation time for the user on the second group timer T222; and step 520 is performed.

In step 517, the PoC server determines whether a third group timer T223 is started, and if the third group timer T223 is started, step 518 is performed; if the third group timer T223 is started, step 59 is performed. The third group timer T223 is configured to set a talk burst maximal occupation time, that is, a sixth talk burst maximal occupation time, for the user when the type of the session is the group session and the talk burst request priority level of the user is the normal priority.

In step 518, the PoC server sets a sixth talk burst maximal occupation time for the user on the third group timer T223; and step 520 is performed.

The group timer includes the first group timer T221, the second group timer T222, and the third group timer T223, and one of the configuration examples of the group timers corresponding to the talk burst request priority levels is as shown in Table 4.

**Table 4 Configuration Examples of Group Timers**

| **Timer** | **Value of Timer** | **Start Occasion** | **Normal Ending Reason** | **Treatment after Timeout** |
|---|---|---|---|---|
| First Group Timer T221 | The fourth talk burst maximal occupation time owned by the user of the pre-emptive priority with a default configuration of T2 | The same as T2 (referring to Table 1) | The same as T2 (referring to Table 1) | The same as T2 (referring to Table 1) |
| Second Group Timer T222 | The fifth talk burst maximal occupation time owned by the user of the high priority with a default configuration of T2 | The same as T2 (referring to Table 1) | The same as T2 (referring to Table 1) | The same as T2 (referring to Table 1) |
| Third Group Timer T223 | The sixth talk burst maximal occupation time owned by the user of the normal priority with a default configuration of T2 | The same as T2 (referring to Table 1) | The same as T2 (referring to Table 1) | The same as T2 (referring to Table 1) |

In step 519, the PoC server sets a predetermined talk burst maximal occupation time, that is, a default talk burst maximal occupation time for the user on a default timer T2; and step 520 is performed.

In step 520, the timer (T2, T211, T212, T213, T221, T222, or T223) starts to count the time, and when the timer expires, the PoC server revokes the permission to send talk burst of the user.

In this embodiment, the differential configuration of the talk burst occupation time is realized according to the type of the PoC session and the talk burst request priority level of the user. Furthermore, by adding the group timers in the group data, the PoC server may configure the permitted talk burst maximal occupation times occupied by the users of the talk burst request priority levels in the group session according to the value configured in the group data; if the group timer is not configured, a corresponding talk burst maximal occupation time is set for the user by adopting the global timer corresponding to the talk burst request priority level of the user; if the group timer and the global timer are not configured, a default talk burst occupation time is set for the user according to the default timer defined in the OMA specification, so as to improve the flexibility of talk burst management, and enrich the service experience of the user.

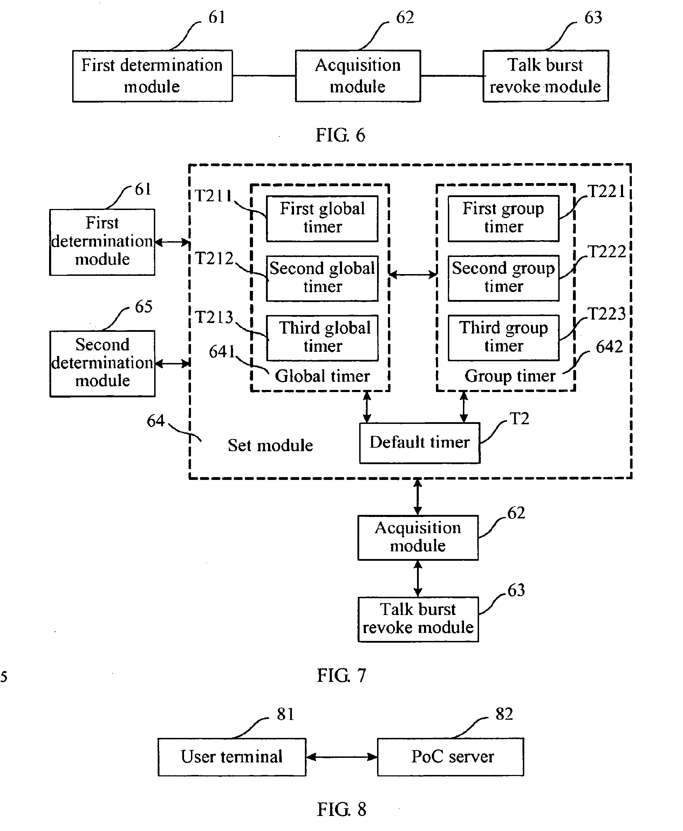

FIG. 6 is a structural view of a PoC server according to an embodiment of the present invention. As shown in FIG. 6, the PoC server according to this embodiment includes a first determination module 61, an acquisition module 62, and a talk burst revoke module 63.

The first determination module 61 is configured to determine a talk burst request priority level of a user in a PoC session.

The acquisition module 62 is configured to acquire a preset talk burst maximal occupation time corresponding to the talk burst request priority level of the user.

The talk burst revoke module 63 is configured to start monitoring of the talk burst maximal occupation time corresponding to the talk burst request priority level of the user, and revoke the permission to send the talk burst of the user, when the talk burst maximal occupation time is exceeded.

In this embodiment, the first determination module determines the talk burst request priority level of the user in the PoC session, the acquisition module acquires the preset talk burst maximal occupation time of the user according to a determination result of the first determination module, and the talk burst revoke module revokes the permission to send the talk burst of the user, when the talk burst maximal occupation time of the user is exceeded. Thus, differentiation of the permitted talk burst maximal occupation time occupied by users owning different talk burst request priority levels is realized, thereby facilitating the flexible management of the user talk burst and enriching the service experience of the user.

FIG. 7 is a structural view of a PoC server according to an embodiment of the present invention. As shown in FIG. 7, the difference between this embodiment and the above embodiment of the PoC server according to the present invention lies in that, the PoC server according to this embodiment further includes a set module 64. The set module 64 includes a global timer 641 and a default timer T2; and the global timer 641 includes a first global timer T211, a second global timer T212, and a third global timer T213.

The set module 64 is configured to determine a corresponding talk burst maximal occupation time for the user according to the talk burst request priority level of the user determined by the first determination module 61.

The global timer 641 is configured to set a corresponding talk burst maximal occupation time for the user according to the talk burst request priority level of the user.

The default timer T2 is configured to set a default talk burst occupation time for the user, when the global timer 641 corresponding to the talk burst request priority level of the user is not configured.

The first global timer T211 is configured to set a first talk burst maximal occupation time for the user, when the talk burst request priority level of the user is a pre-emptive priority.

The second global timer T212 is configured to set a second talk burst maximal occupation time for the user, when the talk burst request priority level of the user is a high priority.

The third global timer T213 is configured to set a third talk burst maximal occupation time for the user, when the talk burst request priority level of the user is a normal priority.

Based on the aforesaid technical solutions, the PoC server according to this embodiment may further include a second determination module 65. The second determination module 65 is configured to determine the type of the session. Accordingly, the set module 64 is further configured to set a corresponding talk burst maximal occupation time for the user according to the type of the PoC session and the talk burst request priority level of the user.

The set module 64 further includes a group timer 642. The group timer 642 is configured to set the corresponding talk burst maximal occupation time set according to the talk burst request priority level of the user in the group data, when the type of the PoC session is the group session. The group session includes a pre-arranged PoC group session or a chat PoC group session. Accordingly, the default timer T2 is further configured to set a default talk burst occupation time for the user when the group timer 642 is not configured.

The group timer 642 may further include a first group timer T221, a second group timer T222, and a third group timer T223.

The first group timer T221 is configured to set a fourth talk burst maximal occupation time for the user, when the type of the PoC session is a group session, and the talk burst request priority level of the user is a pre-emptive priority.

The second group timer T222 is configured to set a fifth talk burst maximal occupation time for the user, when the type of the PoC session is a group session, and the talk burst request priority level of the user is a high priority.

The third group timer T223 is configured to set a sixth talk burst maximal occupation time for the user, when the type of the PoC session is a group session, and the talk burst request priority level of the user is a normal priority.

Based on the aforesaid technical solutions, the global timer 641 is further configured to set a corresponding talk burst maximal occupation time for the user according to the talk burst request priority level of the user, when the group timer 642 corresponding to the talk burst request priority level of the user is not configured.

In this embodiment, differential configuration of talk burst occupation time is realized according to the type of the PoC session and/or the talk burst request priority level of the user. Furthermore, by adding the group timer in the group data, the PoC server may configure the talk burst maximal occupation time occupied by the users of the talk burst request priority levels in the group session according to the value configured in the group data; if the group timer is not configured, a corresponding talk burst maximal occupation time is set for the user by adopting the global timer corresponding to the talk burst request priority level of the user, or a default talk burst occupation time is set for the user according to the default timer defined in the OMA specification; and if the group timer and the global timer are not configured, a default talk burst occupation time is set for the user according to the default timer defined in the OMA specification, so as to improve the flexibility of talk burst management, and enrich the service experience of the user.

For the specific working process of the PoC server according to the present invention, reference is made to the description of the embodiments of the method for managing the user talk burst according to the present invention and Figures 1-5, which will not be repeated herein.

FIG. 8 is a structural view of a system for managing a user talk burst according to an embodiment of the present invention. As shown in FIG. 8, the system according to this embodiment includes a user terminal 81 and a PoC server 82.

The user terminal 81 is configured to acquire a permission to send a talk burst in a PoC session.

The PoC server 82 is configured to determine a talk burst request priority level of a user in the PoC session; acquire a preset talk burst maximal occupation time corresponding to the talk burst request priority level of the user; and start monitoring of the talk burst maximal occupation time corresponding to the talk burst request priority level of the user, and revoke the permission to send the talk burst of the user, when the talk burst maximal occupation time is exceeded.

In this embodiment, according to the system for managing the user talk burst, the user acquires the right to send the talk burst in the PoC session through the user terminal, the PoC server determines the talk burst request priority level of the user, acquires the preset talk burst maximal occupation time corresponding to the talk burst request priority level of the user, and revokes the permission to send the talk burst of the user, when the talk burst maximal occupation time of the user is exceeded. Thus, differentiation of the permitted talk burst maximal occupation time occupied by users owning different talk burst request priority levels is realized, thereby facilitating the flexible management of the user talk burst and enriching the service experience of the user.

As for the further detailed structure of the PoC server in the system for managing the user talk burst according to the present invention, reference is made to the description of the embodiment of the PoC server according to the present invention and Figures 6-7, which will not be repeated herein.

It should be understood by persons skilled in the art that the accompanying drawings are merely schematic views of a preferred embodiment, and modules or processes in the accompanying drawings are not necessarily required in implementing the present invention.

It should be understood by persons skilled in the art that, modules in a device according to an embodiment may be distributed in the device of the embodiment according to the description of the embodiment, or be correspondingly changed to be disposed in one or more devices different from this embodiment. The modules of the embodiment may be combined into one module, or further divided into a plurality of sub-modules.

The sequence numbers of the embodiments of the present invention are merely for the convenience of description, and do not imply the preference among the embodiments.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

Finally, it should be noted that the embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from scope of the present invention which is defined by the appended claims.

## Claims

1. A method for managing talk burst of a user, comprising:
determining (11), by a PoC server, a talk burst request priority level of a user in a Push to Talk over Cellular, PoC, session, wherein different talk burst maximal occupation times are set for users owning different talk burst request priority levels;
starting monitoring (12), by the PoC server, whether a maximal occupation time of talk burst corresponding to the talk burst request priority level of the user is exceeded; and
when the talk burst maximal occupation time is exceeded, revoking (13), by the PoC server, the permission to send the talk burst of the user.

2. The method for managing talk burst of a user according to claim 1, wherein the starting the monitoring whether the maximal occupation time of talk burst corresponding to the talk burst request priority level of the user is exceeded comprises:
starting a timer of the talk burst maximal occupation time corresponding to the talk burst request priority level of the user.

3. The method for managing talk burst of a user according to claim 2, wherein the starting the timer of the talk burst maximal occupation time corresponding to the talk burst request priority level of the user comprises:
determining whether a global timer preset with the talk burst maximal occupation time corresponding to the talk burst request priority level of the user is configured, and if the global timer is configured, starting the global timer; and
when the global timer is not configured, starting a default timer preset with a default talk burst maximal occupation time.

4. The method for managing talk burst of a user according to claim 3, wherein the starting the global timer comprises:
if the talk burst request priority level is a pre-emptive priority (23), determining (24) whether a first global timer is started, and if the first global timer is started, setting (26) a first talk burst maximal occupation time for the user on the first global timer;
if the talk burst request priority level is a high priority, determining (27) whether a second global timer is started, and if the second global timer is started, setting (28) a second talk burst maximal occupation time for the user on the second global timer; and
if the talk burst request priority level is a normal priority, determining (29) whether a third
global timer is started, and if the third global timer is started, setting (210) a third talk burst maximal occupation time for the user on a third global timer.

5. The method for managing talk burst of a user according to any one of claims 2 to 4,
wherein
before the determining the talk burst request priority level of the user in the PoC session, the method further comprises: determining a type of the session (33); and
the starting the timer of the talk burst maximal occupation time corresponding to the talk burst request priority level of the user comprises: starting a timer preset with a talk burst maximal occupation time corresponding to the type of the session and the talk burst request priority level of the user.

6. The method for managing talk burst of a user according to claim 5, wherein the starting the timer preset with the talk burst maximal occupation time corresponding to the type of the session and the talk burst request priority level of the user comprises:
when the type of the session is a non-group session, starting the global timer preset with the talk burst maximal occupation time corresponding to the talk burst request priority level; and the non-group session comprises a one-to-one session or an Adhoc PoC group session;
when the type of the session is a group session, starting a default timer preset with a default talk burst occupation time; and the group session comprises a pre-arranged PoC group session or a chat PoC group session.

7. The method for managing talk burst of a user according to claim 5, wherein before the determining the talk burst request priority level of the user in the PoC session, the method further comprises:
when the type of the session is a group session, determining whether a timer preset with the talk burst maximal occupation time corresponding to the talk burst request priority level of the user is configured in group data,
if the timer preset with the talk burst maximal occupation time corresponding to the talk burst request priority level of the user is configured in group data, and the type of the session is the group session, after the determining the talk burst request priority level of the user, determining whether the group timer preset with the talk burst maximal occupation time corresponding to the talk burst request priority level of the user in the group session is configured, and if the group timer is configured, starting the group timer; and
if the timer preset with the talk burst maximal occupation time corresponding to the talk burst request priority level of the user is not configured in group data, starting a default timer preset with a default talk burst occupation time.

8. The method for managing talk burst of a user according to claim 7, wherein the starting the group timer comprises:
if the talk burst request priority level is a pre-emptive priority, determining (413) whether a first group timer is started, and if the first group timer is started, setting (414) a fourth talk burst maximal occupation time for the user on the first group timer;
if the talk burst request priority level is a high priority, determining (415) whether a second group timer is started, and if the second group timer is started, setting (416) a fifth talk burst maximal occupation time for the user on the second group timer; and
if the talk burst request priority level is a normal priority, determining (417) whether a third group timer is started, and if the third group timer is started, setting (418) a sixth talk burst maximal occupation time for the user on the third group timer.

9. The method for managing talk burst of a user according to claim 7, wherein when the group timer is not configured, the method further comprises:
when the global timer preset with the talk burst maximal occupation time corresponding to the talk burst request priority level of the user is configured, starting the global timer; and
when the global timer is not configured, starting a default timer preset with the default talk burst maximal occupation time.

10. A Push to Talk over Cellular, PoC, server, comprising:
a first determination module (61), configured to determine a talk burst request priority level of a user in a PoC session, wherein different talk burst maximal occupation times are set for users owning different talk burst request priority levels;
an acquisition module (62), configured to acquire a preset talk burst maximal occupation time corresponding to the talk burst request priority level of the user; and
a talk burst revoke module (63), configured to start monitoring whether the talk burst maximal occupation time corresponding to the talk burst request priority level of the user is exceeded, and revoke the permission to send the talk burst of the user, when the talk burst maximal occupation time is exceeded.

11. The PoC server according to claim 10, further comprising:
a set module (64), configured to set the talk burst maximal occupation time corresponding to the talk burst request priority level of the user for the user.

12. The PoC server according to claim 11, wherein the set module comprises:
a global timer (641), configured to set the corresponding talk burst maximal occupation time for the user according to the talk burst request priority level of the user; and
a default timer (T2), configured to set a default talk burst occupation time for the user when the global timer corresponding to the talk burst request priority level of the user is not configured.

13. The PoC server according to claim 12, wherein the global timer comprises:
a first global timer (T211), configured to set a first talk burst maximal occupation time for the user when the talk burst request priority level of the user is a pre-emptive priority;
a second global timer (T212), configured to set a second talk burst maximal occupation time for the user when the talk burst request priority level of the user is a high priority; and
a third global timer (T213), configured to set a third talk burst maximal occupation time for the user when the talk burst request priority level of the user is a normal priority.

14. The PoC server according to any one of claims 12 to 13, further comprising:
a second determination module, configured to determine a type of the session;
wherein the set module is further configured to set a corresponding talk burst maximal occupation time according to the type of the session and the talk burst request priority level of the user for the user;
wherein the set module further comprises:
a group timer (642), configured to set a talk burst maximal occupation time corresponding to the talk burst request priority level of the user in the group data, when the type of the session is a group session; and the group session comprises a pre-arranged PoC group session or a chat PoC group session.

15. The PoC server according to claim 14, wherein the group timer comprises:
a first group timer (T221), configured to set a fourth talk burst maximal occupation time for the user, when the type of the session is the group session and the talk burst request priority level of the user is the pre-emptive priority;
a second group timer (T222), configured to set a fifth talk burst maximal occupation time for the user, when the type of the session is the group session and the talk burst request priority level of the user is the high priority; and
a third group timer (T223), configured to set a sixth talk burst maximal occupation time for the user, when the type of the session is the group session and the talk burst request priority level of the user is the normal priority.

16. A system for managing talk burst of a user, comprising a user terminal (81), and a Push to Talk over Cellular, PoC, server (82) according to any one of claims 10 to 15, wherein
the user terminal is configured to acquire a permission to send a talk burst in a PoC session.

## Patentansprüche

1. Verfahren zum Managen eines Sprach-Bursts eines Anwenders, wobei das Verfahren Folgendes umfasst:
Bestimmen (11) einer Sprach-Burst-Anforderungs-Prioritätsebene eines Anwenders in einer Push-to-Talk-over-Cellular-Sitzung, PoC-Sitzung, durch einen PoC-Server,
wobei für Anwender, die unterschiedliche Sprach-Burst-Anforderungs-Prioritätsebenen besitzen, unterschiedliche Sprach-Burst-Maximalbelegungszeiten eingestellt werden;
Starten einer Überwachung (12), ob eine Sprach-Burst-Maximalbelegungszeit, die der Sprach-Burst-Anforderungs-Prioritätsebene des Anwenders entspricht, überschritten wird, durch den PoC-Server; und
wenn die Sprach-Burst-Maximalbelegungszeit überschritten wird, Widerrufen (13) der Genehmigung zum Senden des Sprach-Bursts des Anwenders durch den PoC-Server.

2. Verfahren zum Managen eines Sprach-Bursts eines Anwenders nach Anspruch 1, wobei das Starten der Überwachung, ob die Sprach-Burst-Maximalbelegungszeit, die der Sprach-Burst-Anforderungs-Prioritätsebene des Anwenders entspricht, überschritten wird, Folgendes umfasst:
Starten eines Zeitgebers der Sprach-Burst-Maximalbelegungszeit, die der Sprach-Burst-Anforderungs-Prioritätsebene des Anwenders entspricht.

3. Verfahren zum Managen eines Sprach-Bursts eines Anwenders nach Anspruch 2, wobei das Starten des Zeitgebers der Sprach-Burst-Maximalbelegungszeit, die der Sprach-Burst-Anforderungs-Prioritätsebene des Anwenders entspricht, Folgendes umfasst:
Bestimmen, ob ein globaler Zeitgeber, der mit der Sprach-Burst-Maximalbelegungszeit, die der Sprach-Burst-Anforderungs-Prioritätsebene des Anwenders entspricht, voreingestellt ist, konfiguriert ist, und wenn der globale Zeitgeber konfiguriert ist, Starten des globalen Zeitgebers; und
wenn der globale Zeitgeber nicht konfiguriert ist, Starten eines Standardzeitgebers, der mit einer Standard-Sprach-Burst-Maximalbelegungszeit voreingestellt ist.

4. Verfahren zum Managen eines Sprach-Bursts eines Anwenders nach Anspruch 3, wobei das Starten des globalen Zeitgebers Folgendes umfasst:
wenn die Sprach-Burst-Anforderungs-Prioritätsebene eine unterbrechende Priorität ist (23), Bestimmen (24), ob ein erster globaler Zeitgeber gestartet ist, und falls der erste globale Zeitgeber gestartet ist, Einstellen (26) einer ersten Sprach-Burst-Maximalbelegungszeit für den Anwender an dem ersten globalen Zeitgeber;
falls die Sprach-Burst-Anforderungs-Prioritätsebene eine hohe Priorität ist, Bestimmen (27), ob ein zweiter globaler Zeitgeber gestartet ist, und falls der zweite globale Zeitgeber gestartet ist, Einstellen (28) einer zweiten Sprach-Burst-Maximalbelegungszeit für den Anwender an dem zweiten globalen Zeitgeber; und
falls die Sprach-Burst-Anforderungs-Prioritätsebene eine normale Priorität ist, Bestimmen (29), ob ein dritter globaler Zeitgeber gestartet ist, und falls der dritte globale Zeitgeber gestartet ist, Einstellen (210) einer dritten Sprach-Burst-Maximalbelegungszeit für den Anwender an einem dritten globalen Zeitgeber.

5. Verfahren zum Managen eines Sprach-Bursts eines Anwenders nach einem der Ansprüche 2 bis 4, wobei
das Verfahren vor dem Bestimmen der Sprach-Burst-Anforderungs-Prioritätsebene des Anwenders in der PoC-Sitzung ferner Folgendes umfasst: Bestimmen eines Typs der Sitzung (33); und
das Starten des Zeitgebers der Sprach-Burst-Maximalbelegungszeit, die der Sprach-Burst-Anforderungs-Prioritätsebene des Anwenders entspricht, Folgendes umfasst:
Starten eines Zeitgebers, der mit einer Sprach-Burst-Maximalbelegungszeit, die dem Typ der Sitzung und der Sprach-Burst-Anforderungs-Prioritätsebene des Anwenders entspricht, voreingestellt ist.

6. Verfahren zum Managen eines Sprach-Bursts eines Anwenders nach Anspruch 5, wobei das Starten des Zeitgebers, der mit der Sprach-Burst-Maximalbelegungszeit, die dem Typ der Sitzung und der Sprach-Burst-Anforderungs-Prioritätsebene des Anwenders entspricht, voreingestellt ist, Folgendes umfasst:
wenn der Typ der Sitzung eine Nicht-Gruppen-Sitzung ist, Starten des globalen Zeitgebers, der mit der Sprach-Burst-Maximalbelegungszeit, die der Sprach-Burst-Anforderungs-Prioritätsebene entspricht, voreingestellt ist; und wobei die Nicht-Gruppen-Sitzung eine Eins-zu-eins-Sitzung oder eine Adhoc-PoC-Gruppensitzung umfasst;
wenn der Typ der Sitzung eine Gruppensitzung ist, Starten eines Standardzeitgebers, der mit einer Standard-Sprach-Burst-Belegungszeit voreingestellt ist; und wobei die Gruppensitzung eine im Voraus vereinbarte PoC-Gruppensitzung oder eine Chat-PoC-Gruppensitzung umfasst.

7. Verfahren zum Managen eines Sprach-Bursts eines Anwenders nach Anspruch 5, wobei das Verfahren vor dem Bestimmen der Sprach-Burst-Anforderungs-Prioritätsebene des Anwenders in der PoC-Sitzung ferner Folgendes umfasst:
wenn der Typ der Sitzung eine Gruppensitzung ist, Bestimmen, ob ein Zeitgeber, der mit der Sprach-Burst-Maximalbelegungszeit, die der Sprach-Burst-Anforderungs-Prioritätsebene des Anwenders entspricht, voreingestellt ist, in Gruppendaten konfiguriert ist,
falls der Zeitgeber, der mit der Sprach-Burst-Maximalbelegungszeit, die der Sprach-Burst-Anforderungs-Prioritätsebene des Anwenders entspricht, voreingestellt ist, in Gruppendaten konfiguriert ist und der Typ der Sitzung die Gruppensitzung ist, nach dem Bestimmen der Sprach-Burst-Anforderungs-Prioritätsebene des Anwenders Bestimmen, ob der Gruppenzeitgeber, der mit der Sprach-Burst-Maximalbelegungszeit, die der Sprach-Burst-Anforderungs-Prioritätsebene des Anwenders in der Gruppensitzung entspricht, voreingestellt ist, konfiguriert ist, und falls der Gruppenzeitgeber konfiguriert ist, Starten des Gruppenzeitgebers; und
falls der Zeitgeber, der mit der Sprach-Burst-Maximalbelegungszeit, die der Sprach-Burst-Anforderungs-Prioritätsebene des Anwenders entspricht, nicht in Gruppendaten konfiguriert ist, voreingestellt ist, Starten eines Standardzeitgebers, der mit einer Standard-Sprach-Burst-Belegungszeit voreingestellt ist.

8. Verfahren zum Managen eines Sprach-Bursts eines Anwenders nach Anspruch 7, wobei das Starten des Gruppenzeitgebers Folgendes umfasst:
falls die Sprach-Burst-Anforderungs-Prioritätsebene eine unterbrechende Priorität ist, Bestimmen (413), ob ein erster Gruppenzeitgeber gestartet ist, und falls der erste Gruppenzeitgeber gestartet ist, Einstellen (414) einer vierten Sprach-Burst-Maximalbelegungszeit für den Anwender an dem ersten Gruppenzeitgeber;
falls die Sprach-Burst-Anforderungs-Prioritätsebene eine hohe Priorität ist, Bestimmen (415), ob ein zweiter Gruppenzeitgeber gestartet ist, und falls der zweite Gruppenzeitgeber gestartet ist, Einstellen (416) einer fünften Sprach-Burst-Maximalbelegungszeit für den Anwender an dem zweiten Gruppenzeitgeber; und
falls die Sprach-Burst-Anforderungs-Prioritätsebene eine normale Priorität ist, Bestimmen (417), ob ein dritter Gruppenzeitgeber gestartet ist, und falls der dritte Gruppenzeitgeber gestartet ist, Einstellen (418) einer sechsten Sprach-Burst-Maximalbelegungszeit für den Anwender an dem dritten Gruppenzeitgeber.

9. Verfahren zum Managen eines Sprach-Bursts eines Anwenders nach Anspruch 7, wobei das Verfahren, wenn der Gruppenzeitgeber nicht konfiguriert ist, ferner Folgendes umfasst:
wenn der globale Zeitgeber, der mit der Sprach-Burst-Maximalbelegungszeit, die der Sprach-Burst-Anforderungs-Prioritätsebene des Anwenders entspricht, voreingestellt ist, konfiguriert ist, Starten des globalen Zeitgebers; und
wenn der globale Zeitgeber nicht konfiguriert ist, Starten eines Standardzeitgebers, der mit der Standard-Sprach-Burst-Maximalbelegungszeit voreingestellt ist.

10. Push-to-Talk-over-Cellular-Server, PoC-Server, der Folgendes umfasst:
ein erstes Bestimmungsmodul (61), das zum Bestimmen einer Sprach-Burst-Anforderungs-Prioritätsebene eines Anwenders in einer PoC-Sitzung konfiguriert ist,
wobei für Anwender, die unterschiedliche Sprach-Burst-Anforderungs-Prioritätsebenen besitzen, unterschiedliche Sprach-Burst-Maximalbelegungszeiten eingestellt sind;
ein Erfassungsmodul (62), das zum Erfassen einer voreingestellten Sprach-Burst-Maximalbelegungszeit, die der Sprach-Burst-Anforderungs-Prioritätsebene des Anwenders entspricht, konfiguriert ist; und
ein Sprach-Burst-Widerrufmodul (63), das zum Starten einer Überwachung, ob die Sprach-Burst-Maximalbelegungszeit, die der Sprach-Burst-Anforderungs-Prioritätsebene des Anwenders entspricht, überschritten wird, und zum Widerrufen der Genehmigung zum Senden des Sprach-Bursts des Anwenders, wenn die Sprach-Burst-Maximalbelegungszeit überschritten wird, konfiguriert ist.

11. PoC-Server nach Anspruch 10, der ferner Folgendes umfasst:
ein Einstellmodul (64), das zum Einstellen der Sprach-Burst-Maximalbelegungszeit, die der Sprach-Burst-Anforderungs-Prioritätsebene des Anwenders entspricht, für den Anwender konfiguriert ist.

12. PoC-Server nach Anspruch 11, wobei das Einstellmodul Folgendes umfasst:
einen globalen Zeitgeber (641), der zum Einstellen der entsprechenden Sprach-Burst-Maximalbelegungszeit für den Anwender in Übereinstimmung mit der Sprach-Burst-Anforderungs-Prioritätsebene des Anwenders konfiguriert ist; und
einen Standardzeitgeber (T2), der zum Einstellen einer Standard-Sprach-Burst-Belegungszeit für den Anwender, wenn der globale Zeitgeber, der der Sprach-Burst-Anforderungs-Prioritätsebene des Anwenders entspricht, nicht konfiguriert ist, konfiguriert ist.

13. PoC-Server nach Anspruch 12, wobei der globale Zeitgeber Folgendes umfasst:
einen ersten globalen Zeitgeber (T211), der zum Einstellen einer ersten Sprach-Burst-Maximalbelegungszeit für den Anwender, wenn die Sprach-Burst-Anforderungs-Prioritätsebene des Anwenders eine unterbrechende Priorität ist, konfiguriert ist;
einen zweiten globalen Zeitgeber (T212), der zum Einstellen einer zweiten Sprach-Burst-Maximalbelegungszeit des Anwenders, wenn die Sprach-Burst-Anforderungs-Prioritätsebene für den Anwender eine hohe Priorität ist, konfiguriert ist; und
einen dritten globalen Zeitgeber (T213), der zum Einstellen einer dritten Sprach-Burst-Maximalbelegungszeit für den Anwender, wenn die Sprach-Burst-Anforderungs-Prioritätsebene des Anwenders eine normale Priorität ist, konfiguriert ist.

14. PoC-Server nach einem der Ansprüche 12 bis 13, der ferner Folgendes umfasst:
ein zweites Bestimmungsmodul, das zum Bestimmen eines Typs der Sitzung konfiguriert ist;
wobei das Einstellmodul ferner zum Einstellen einer entsprechenden Sprach-Burst-Maximalbelegungszeit in Übereinstimmung mit dem Typ der Sitzung und mit der Sprach-Burst-Anforderungs-Prioritätsebene des Anwenders für den Anwender konfiguriert ist;
wobei das Einstellmodul ferner Folgendes umfasst:
einen Gruppenzeitgeber (642), der zum Einstellen einer Sprach-Burst-Maximalbelegungszeit, die der Sprach-Burst-Anforderungs-Prioritätsebene des Anwenders entspricht, in den Gruppendaten, wenn der Typ der Sitzung eine Gruppensitzung ist, konfiguriert ist; und wobei die Gruppensitzung eine im Voraus vereinbarte PoC-Gruppensitzung oder eine Chat-PoC-Gruppensitzung umfasst.

15. PoC-Server nach Anspruch 14, wobei der Gruppenzeitgeber Folgendes umfasst:
einen ersten Gruppenzeitgeber (T221), der zum Einstellen einer vierten Sprach-Burst-Maximalbelegungszeit für den Anwender, wenn der Typ der Sitzung die Gruppensitzung ist und die Sprach-Burst-Anforderungs-Prioritätsebene des Anwenders die unterbrechende Priorität ist, konfiguriert ist;
einen zweiten Gruppenzeitgeber (T222), der zum Einstellen einer fünften Sprach-Burst-Maximalbelegungszeit für den Anwender, wenn der Typ der Sitzung die Gruppensitzung ist und die Sprach-Burst-Anforderungs-Prioritätsebene des Anwenders die hohe Priorität ist, konfiguriert ist; und
einen dritten Gruppenzeitgeber (T223), der zum Einstellen einer sechsten Sprach-Burst-Maximalbelegungszeit für den Anwender, wenn der Typ der Sitzung die Gruppensitzung ist und die Sprach-Burst-Anforderungs-Prioritätsebene des Anwenders die normale Priorität ist, konfiguriert ist.

16. System zum Managen eines Sprach-Bursts eines Anwenders, wobei das System ein Anwenderendgerät (81) und einen Push-to-Talk-over-Cellular-Server, PoC-Server, (82) in Übereinstimmung mit einem der Ansprüche 10 bis 15 umfasst, wobei das Anwenderendgerät zum Erfassen einer Genehmigung zum Senden eines Sprach-Bursts in einer PoC-Sitzung konfiguriert ist.

## Revendications

1. Procédé de gestion d'une rafale vocale d'un utilisateur, comprenant :
la détermination (11), par un serveur PoC, d'un niveau de priorité d'une requête de rafale vocale d'un utilisateur dans une session d'Alternat sur Cellulaire, PoC (Push-to-Talk over Cellular), dans lequel des temps d'occupation maximaux de rafale vocale différents sont réglés pour des utilisateurs possédant différents niveaux de priorité de la requête de rafale vocale ;
le lancement d'un contrôle (12), par le serveur PoC, qu'un temps d'occupation maximal de rafale vocale correspondant au niveau de priorité de la requête de rafale vocale de l'utilisateur est dépassé ou non ; et
quand le temps d'occupation maximal de rafale vocale est dépassé, l'annulation (13), par le serveur PoC, de la permission d'envoyer la rafale vocale de l'utilisateur.

2. Procédé de gestion d'une rafale vocale d'un utilisateur selon la revendication 1, dans lequel le lancement du contrôle qu'un temps d'occupation maximal de rafale vocale correspondant au niveau de priorité de la requête de rafale vocale de l'utilisateur est dépassé ou non comprend :
le lancement d'une temporisation du temps d'occupation maximal de rafale vocale correspondant au niveau de priorité de la requête de rafale vocale de l'utilisateur.

3. Procédé de gestion d'une rafale vocale d'un utilisateur selon la revendication 2, dans lequel le lancement de la temporisation du temps d'occupation maximal de rafale vocale correspondant au niveau de priorité de la requête de rafale vocale de l'utilisateur comprend :
la détermination qu'une temporisation globale préréglée sur le temps d'occupation maximal de rafale vocale correspondant au niveau de priorité de la requête de rafale vocale de l'utilisateur est configurée ou non, et si la temporisation globale est configurée, le lancement de la temporisation globale ; et
quand la temporisation globale n'est pas configurée, le lancement d'une temporisation par défaut préréglée sur un temps d'occupation maximal de rafale vocale par défaut.

4. Procédé de gestion d'une rafale vocale d'un utilisateur selon la revendication 3, dans lequel le lancement de la temporisation globale comprend :
si le niveau de priorité de la requête de rafale vocale est une priorité préemptive (23), la détermination (24) qu'une première temporisation globale est lancée ou non, et si la première temporisation globale est lancée, le réglage (26) d'un premier temps d'occupation maximal de rafale vocale de l'utilisateur sur la première temporisation globale ;
si le niveau de priorité de la requête de rafale vocale est une haute priorité, la détermination (27) qu'une deuxième temporisation globale est lancée ou non, et si la deuxième temporisation globale est lancée, le réglage (28) d'un deuxième temps d'occupation maximal de rafale vocale de l'utilisateur sur la deuxième temporisation globale ; et
si le niveau de priorité de la requête de rafale vocale est une priorité normale, la détermination (29) qu'une troisième temporisation globale est lancée ou non, et si la troisième temporisation globale est lancée, le réglage (210) d'un troisième temps d'occupation maximal de rafale vocale de l'utilisateur sur une troisième temporisation globale.

5. Procédé de gestion d'une rafale vocale d'un utilisateur selon l'une quelconque des revendications 2 à 4, comprenant en outre
avant la détermination du niveau de priorité de la requête de rafale vocale de l'utilisateur dans la session PoC : la détermination d'un type de la session (33) ; et dans lequel
le lancement de la temporisation du temps d'occupation maximal de rafale vocale correspondant au niveau de priorité de la requête de rafale vocale de l'utilisateur comprend : le lancement d'une temporisation préréglée sur un temps d'occupation maximal de rafale vocale correspondant au type de la session et au niveau de priorité de la requête de rafale vocale de l'utilisateur.

6. Procédé de gestion d'une rafale vocale d'un utilisateur selon la revendication 5, dans lequel le lancement de la temporisation préréglée sur le temps d'occupation maximal de rafale vocale correspondant au type de la session et au niveau de priorité de la requête de rafale vocale de l'utilisateur comprend :
quand le type de la session est une session non de groupe, le lancement de la temporisation globale préréglée sur le temps d'occupation maximal de rafale vocale correspondant au niveau de priorité de la requête de rafale vocale ; et la session non de groupe comprend une session biunivoque ou une session de groupe PoC ad hoc ;
quand le type de la session est une session de groupe, le lancement d'une temporisation par défaut préréglée sur un temps d'occupation de rafale vocale par défaut ; et la session de groupe comprend une session de groupe PoC pré-convenue ou une session de groupe PoC de dialogue en ligne.

7. Procédé de gestion d'une rafale vocale d'un utilisateur selon la revendication 5, comprenant en outre, avant la détermination du niveau de priorité de la requête de rafale vocale de l'utilisateur dans la session PoC :
quand le type de session est une session de groupe, la détermination qu'une temporisation préréglée sur le temps d'occupation maximal de rafale vocale correspondant au niveau de priorité de la requête de rafale vocale de l'utilisateur est configurée ou non en données de groupe,
si la temporisation préréglée sur le temps d'occupation maximal de rafale vocale correspondant au niveau de priorité de la requête de rafale vocale de l'utilisateur est configurée en données de groupe, et que le type de la session est la session de groupe, après la détermination du niveau de priorité de la requête de rafale vocale de l'utilisateur, la détermination que la temporisation de groupe préréglée sur le temps d'occupation maximal de rafale vocale correspondant au niveau de priorité de la requête de rafale vocale de l'utilisateur dans la session de groupe est configurée ou non, et si la temporisation de groupe est configurée, le lancement de la temporisation de groupe ; et
si la temporisation préréglée sur le temps d'occupation maximal de rafale vocale correspondant au niveau de priorité de la requête de rafale vocale de l'utilisateur n'est pas configurée en données de groupe, le lancement d'une temporisation par défaut préréglée sur un temps d'occupation de rafale vocale par défaut.

8. Procédé de gestion d'une rafale vocale d'un utilisateur selon la revendication 7, dans lequel le lancement de la temporisation de groupe comprend :
si le niveau de priorité de la requête de rafale vocale est une priorité préemptive, la détermination (413) qu'une première temporisation de groupe est lancée ou non, et si la première temporisation de groupe est lancée, le réglage (414) d'un quatrième temps d'occupation maximal de rafale vocale de l'utilisateur sur la première temporisation de groupe ;
si le niveau de priorité de la requête de rafale vocale est une haute priorité, la détermination (415) qu'une deuxième temporisation de groupe est lancée ou non, et si la deuxième temporisation de groupe est lancée, le réglage (416) d'un cinquième temps d'occupation maximal de rafale vocale de l'utilisateur sur la deuxième temporisation de groupe ; et
si le niveau de priorité de la requête de rafale vocale est une priorité normale, la détermination (417) qu'une troisième temporisation de groupe est lancée ou non, et si la troisième temporisation de groupe est lancée, le réglage (418) d'un sixième temps d'occupation maximal de rafale vocale de l'utilisateur sur la troisième temporisation de groupe.

9. Procédé de gestion d'une rafale vocale d'un utilisateur selon la revendication 7, comprenant en outre quand la temporisation de groupe n'est pas configurée :
quand la temporisation globale préréglée sur le temps d'occupation maximal de rafale vocale correspondant au niveau de priorité de la requête de rafale vocale de l'utilisateur est configurée, le lancement de la temporisation globale ; et
quand la temporisation globale n'est pas configurée, le lancement d'une temporisation par défaut préréglée sur le temps d'occupation maximal de rafale vocale par défaut.

10. Serveur d'Alternat sur Cellulaire, PoC, comprenant :
un premier module de détermination (61), configuré pour déterminer un niveau de priorité d'une requête de rafale vocale d'un utilisateur dans une session PoC, dans lequel des temps d'occupation maximaux de rafale vocale différents sont réglés pour des utilisateurs possédant différents niveaux de priorité de la requête de rafale vocale ;
un module d'acquisition (62), configuré pour acquérir un temps d'occupation maximal de rafale vocale préréglé correspondant au niveau de priorité de la requête de rafale vocale de l'utilisateur ; et
un module d'annulation de rafale vocale (63), configuré pour lancer le contrôle que le temps d'occupation maximal de rafale vocale correspondant au niveau de priorité de la requête de rafale vocale de l'utilisateur est dépassé ou non, et annuler la permission d'envoyer la rafale vocale de l'utilisateur, quand le temps d'occupation maximal de rafale vocale est dépassé.

11. Serveur PoC selon la revendication 10, comprenant en outre :
un module de réglage (64), configuré pour régler le temps d'occupation maximal de rafale vocale correspondant au niveau de priorité de la requête de rafale vocale de l'utilisateur pour l'utilisateur.

12. Serveur PoC selon la revendication 11, dans lequel le module de réglage comprend :
une temporisation globale (641), configurée pour régler le temps d'occupation maximal de rafale vocale correspondant de l'utilisateur en fonction du niveau de priorité de la requête de rafale vocale de l'utilisateur ; et
une temporisation par défaut (T2), configurée pour régler un temps d'occupation maximal de rafale vocale par défaut de l'utilisateur quand la temporisation globale correspondant au niveau de priorité de la requête de rafale vocale de l'utilisateur n'est pas configurée.

13. Serveur PoC selon la revendication 12, dans lequel la temporisation globale comprend
une première temporisation globale (T211), configurée pour régler un premier temps d'occupation maximal de rafale vocale de l'utilisateur quand le niveau de priorité de la requête de rafale vocale de l'utilisateur est une priorité préemptive ;
une deuxième temporisation globale (T212), configurée pour régler un deuxième temps d'occupation maximal de rafale vocale de l'utilisateur quand le niveau de priorité de la requête de rafale vocale de l'utilisateur est une haute priorité ; et
une troisième temporisation globale (T213), configurée pour régler un troisième temps d'occupation maximal de rafale vocale de l'utilisateur quand le niveau de priorité de la requête de rafale vocale de l'utilisateur est une priorité normale.

14. Serveur PoC selon l'une quelconque des revendications 12 et 13, comprenant en outre :
un second module de détermination, configuré pour déterminer un type de la session ; dans lequel le module de réglage est configuré en outre pour régler un temps d'occupation maximal de rafale vocale correspondant en fonction du type de la session et du niveau de priorité de la requête de rafale vocale de l'utilisateur pour l'utilisateur ;
dans lequel le module de réglage comprend en outre :
une temporisation de groupe (642), configurée pour régler un temps d'occupation maximal de rafale vocale correspondant au niveau de priorité de la requête de rafale vocale de l'utilisateur dans les données de groupe, quand le type de la session est une session de groupe ; et la session de groupe comprend une session de groupe PoC pré-convenue ou une session de groupe PoC de dialogue en ligne.

15. Serveur PoC selon la revendication 14, dans lequel la temporisation de groupe comprend :
une première temporisation de groupe (T221), configurée pour régler un quatrième temps d'occupation maximal de rafale vocale de l'utilisateur, quand le type de la session est la session de groupe et le niveau de priorité de la requête de rafale vocale de l'utilisateur est la priorité préemptive ;
une deuxième temporisation de groupe (T222), configurée pour régler un cinquième temps d'occupation maximal de rafale vocale de l'utilisateur, quand le type de la session est la session de groupe et le niveau de priorité de la requête de rafale vocale de l'utilisateur est la haute priorité ; et
une troisième temporisation de groupe (T223), configurée pour régler un sixième temps d'occupation maximal de rafale vocale de l'utilisateur quand le type de la session est la session de groupe et le niveau de priorité de la requête de rafale vocale de l'utilisateur est la priorité normale.

16. Système de gestion d'une rafale vocale d'un utilisateur, comprenant un terminal utilisateur (81) et un serveur d'Alternat sur Cellulaire, PoC (82), selon l'une quelconque des revendications 10 à 15, dans lequel
le terminal utilisateur est configuré pour acquérir une permission d'envoyer une rafale vocale dans une session PoC.
